# EUROPÄISCHE PATENTSCHRIFT

(11) **EP 0 565 839 B1**
(45) Veröffentlichungstag und Bekanntmachung des Hinweises auf die Patenterteilung: **20.11.1996**
(21) Anmeldenummer: 93103166.0
(22) Anmeldetag: 27.02.1993
(51) Int. Cl.: B22C 9/28, B22C 9/10, B60B 3/06

(54) **Verfahren zum Giessen eines Kraftfahrzeugrades aus Metall sowie nach dem Verfahren hergestelltes Kraftfahrzeugrad**
Method to cast a metal motor vehicle wheel and so cast wheel
Procédé de coulée de roue pour véhicule à moteur en métal et roue

(30) Priorität: 03.04.1992 DE 4211130
(43) Veröffentlichungstag der Anmeldung: 20.10.1993
(73) Patentinhaber: EB Brühl Aluminiumtechnik GmbH, D-50321 Brühl (DE)
(72) Erfinder: Schilling, Herbert, W-5042 Erftstadt (DE)
(74) Vertreter: Neumann, Ernst Dieter, Dipl.-Ing.

(56) Entgegenhaltungen:
- EP-A- 0 070 812
- EP-A- 0 549 141
- WO-A-87/07543
- DE-B- 1 249 462
- DE-C- 231 965
- US-A- 1 489 245
- US-A- 1 556 429
- US-A- 1 561 983
- US-A- 2 611 161
- PATENT ABSTRACTS OF JAPAN vol. 10, no. 267 (M-516)(2323) 11. September 1986 & JP-A-61 92 754 (YAMAHA MOTOR CO LTD) 10. Mai 1986

## Beschreibung

Die Erfindung betrifft ein Verfahren zum Gießen eines Kraftfahrzeugrades aus Metall, insbesondere aus einer Aluminiumlegierung, das einen Felgenkranz und einen über tragende Radialelemente mit dem Felgenkranz verbundenen Nabenteil aufweist.

Aus einer Aluminiumlegierung gegossene Kraftfahrzeugräder wurden wegen der besonderen Form des Felgenbettes in der Weise hergestellt, daß zumindest für den Bereich zur Formung des Felgenbettes eine zwei- oder mehrteilige radial öffenbare Form verwendet wurde. (EP-A-0070812) Die hierbei erzielbaren Genauigkeiten hinsichtlich Rundlauf, einheitlicher Wandstärke etc. machten es jedoch erforderlich, daß der abgegossene Rohling in einer aufwendigen spanabhebenden Bearbeitung nachbearbeitet werden mußte. Alle zusätzlich anzubringenden Elemente, beispielsweise Ventilatorkränze, Zierabdeckungen, insbesondere Zierabdeckungen für Zwecke der Luftführung, mußten als gesonderte Bauteile hergestellt und anschließend am gegossenen Radkörper beispielsweise durch Verschraubung, montiert werden. Dies erfordert dann nach der Bearbeitung und der Montage der Zusatzteile eine weitere Nachbearbeitung zur Wuchtung des fertigen Kraftfahrzeugrades.

Der Erfindung liegt nun die Aufgabe zugrunde, ein Verfahren der eingangs bezeichneten Art zu schaffen, das den Guß eines Kraftfahrzeugrades mit hoher Genauigkeit ermöglicht.

Diese Aufgabe wird erfindungsgemäß dadurch gelöst, daß die Gießform durch mehrere axial zusammengefügte, im wesentlichen ring- und/oder scheibenförmige Kernteile gebildet wird, deren Teilungsebene im wesentlichen senkrecht zur Radachse ausgerichtet ist. Dieses Verfahren hat den Vorteil, daß durch das Auflösen der Gießform in mehrere im wesentlichen ring- und/oder scheibenförmige Kernteile, die axial zusammengefügt werden, eine einwandfreie Rundlaufgenauigkeit, und über die Möglichkeit einer in Richtung der Achse erfolgten Zentrierung gleichmäßige Wandstärken zu erzielen sind. Hierbei wird mit Vorteil ein Verfahren ausgenutzt, bei dem die einzelnen Teile der Gießform aus einem nichtmetallischen Formstoff bestehen, wie er aus der Kernformtechnik zur Herstellung von Gießereikernen aus einem fließfähigen, kalt aushärtbaren Formstoff bekannt ist. Die hohe Präzision ist dadurch möglich, daß die einzelnen Kernteile jeweils in einer aus wenigstens zwei Formteilen bestehenden Kernform für sich geformt werden, daß jeweils nach Abschluß des Formprozesses der einzelnen Kernteile die jeweilige Form so geöffnet wird, daß der jeweilige Kernteil mit einem Formteil verbunden bleibt und danach die einzelnen zur Gießform zusammenzufügenden Kernteile mit über die noch mit ihnen verbundenen Formteile durch definierte Relativbewegungen der Formteile zueinander zusammengefügt werden. Da die Zentrierung der zusammenzufügenden einzelnen Kernteile nicht über die Kernteile selbst sondern über deren Formteile, also maschinenbezogene Teile erfolgt, läßt sich hier eine sehr genaue Fügung bewirken. Bei diesem Verfahren wird ein Kernteil als Basiskernteil definiert, der mit seinem zugehörigen Formteil als Träger und Zentrierelement mit diesem Kernteil solange verbunden bleibt, bis alle zur vollständigen Erstellung der Gießform erforderlichen Fügeoperationen abgeschlossen sind. Erst danach wird die so zusammengefügte vollständige Gießform abgegossen. Da bei diesem Verfahren die für das Zusammenfügen erforderliche geometrische Zuordnung und die daraus resultierende Relativbewegung der zusammenzufügenden Kernteile zueinander für die Herstellung von Kraftfahrzeugrädern ausschließlich in Richtung der Radachse erfolgen kann, ergibt sich eine hohe Präzision der zusammengefügten Teile, wie sie nach einem vollständigen Ausformen der einzelnen Kernteile und gesondertem Zusammenfügen nicht zu erreichen ist. Es wird hierbei mit Vorteil ausgenutzt, daß bei diesem kalten Formprozeß, bei dem das Bindemittel des Formstoffes bzw. des Kernsandes nicht durch Temperatur sondern durch chemisch-katalytische Vorgänge erfolgt, die Formteile der einzelnen Formmaschinen praktisch gleiche Temperaturen aufweisen und so keinerlei Maßabweichungen der einzelnen Formteile zueinander durch Wärmedehnungen auftreten können, so daß die einzelnen Formteile mit einander zuordenbaren Führungs- und Zentrierflächen versehen werden können, die eine hohe Formgenauigkeit bewirken, so daß das fertige Gußstück praktisch keine oder nur minimale Formnähte aufweist. Die hohe Formgenauigkeit rührt nicht zuletzt daher, daß die einzelnen Teile der Gießform jeweils neu hergestellt und mit großer Präzision zusammengefügt werden. Damit ist es dann möglich, ein derartiges aus Felgenkranz, Nabenteil und tragenden Radialelementen bestehendes Kraftfahrzeugrad einstückig zu gießen. Die tragenden Radialelemente können hierbei insgesamt scheibenförmig und/oder speichenförmig ausgebildet sein. Das erfindungsgemäße Form- und Gießverfahren erlaubt es hierbei auch, tragende Radialelemente in Speichenform vorzusehen, die als Ventilatorblätter ausgebildet sind, d. h. gegenüber der Radebene in axialer Richtung geneigt verlaufen. Die hierfür erforderlichen Kernteile, es genügen hierbei je nach Gestaltung zwei Kernteile, sind dann im wesentlichen scheibenförmig ausgebildet, wobei die einander zugekehrten Oberflachen dieser beiden Kernteile sich entsprechend ergänzende Höcker oder Nocken aufweisen, so daß dem Konstrukteur hier eine in weiten Bereichen freie Gestaltungsmöglichkeit für die Formgebung der tragenden Radialelemente gegeben ist. Somit ist es nach dem erfindungsgemäßen Verfahren auch möglich, einstückig gegossene ventilierende Kraftfahrzeugräder herzustellen.

Die Erfindung betrifft ferner ein Kraftfahrzeugrad aus Metall, insbesondere aus einer Aluminiumlegierung, mit einem Felgenkranz und einem über tragende Radialelemente verbundenen Nabenteil, das nach dem erfindungsgemäßen Verfahren gegossen ist.

Das erfindungsgemäße Kraftfahrzeugrad ist dadurch gekennzeichnet, daß der Felgenkranz, die tragenden Radialelemente und der Nabenteil einstückig gegossen sind.

In einer vorteilhaften Ausgestaltung der Erfindung ist vorgesehen, daß die tragenden Radialelemente zumindest teilweise speichenförmig und als Ventilatorblätter ausgebildet sind. Damit entfällt die Herstellung und Montage eines zusätzlichen Kranzes von Ventilatorblättern.

In einer anderen Ausgestaltung des erfindungsgemäßen Kraftfahrzeugrades ist vorgesehen, daß die tragenden Radialelemente, in Umfangsrichtung gesehen, in zwei parallelen Reihen angeordnet sind. Diese Ausgestaltung ist sowohl für im wesentlichen scheibenförmige als auch für im wesentlichen speichenförmige tragende Radialelemente möglich. Der besondere Vorteil dieser Ausgestaltung besteht darin, daß die Verbindung zwischen Felgenkranz und Nabenteil nunmehr im wesentlichen "doppelwandig" ausgebildet werden kann, so daß sich hier eine erheblich höhere Formsteifigkeit für derartige Kraftfahrzeugräder ergibt, was insbesondere für Kraftfahrzeugräder von Bedeutung ist, die mit sogenannten Breitreifen bestückt werden.

In einer anderen Ausgestaltung der Erfindung ist vorgesehen, daß die tragenden Radialelemente zumindest über einen Teil ihrer radialen Erstreckung scheiben- und/oder ringförmig ausgebildet und über Ventilatorlamellen untereinander verbunden sind. Diese Anordnung hat den Vorteil, daß neben der erhöhten Formsteifigkeit auch die Ventilatorleistung verbessernd beeinflußt werden kann, da dieser Bereich des Kraftfahrzeugrades in seinen tragenden Radialelementen wie ein Kreisellüfterrad in Form eines sogenannten Kanalrades ausgebildet werden kann, wobei der besondere Vorteil darin besteht, daß die Anordnung einstückig ausgebildet ist.

Die Erfindung wird anhand schematischer Zeichnungen von Ausführungsbeispielen näher erläutert. Es zeigen:
- Fig. 1: den Verfahrensablauf in Form eines Fließbildes,
- Fig. 2: einen Vertikalschnitt durch eine aus Ringen und Scheiben aufgebaute Gießform,
- Fig. 3: einen Schnitt durch ein nach dem Verfahren gegossenes Kraftfahrzeugrad mit doppelwandigem tragenden Radialelement,
- Fig. 4: ein Kraftfahrzeugrad mit speichenförmigem Tragelement,
- Fig. 5: eine Abwicklung des Nabenteils der Ausführungsform gem. Fig. 4 mit Schnitt durch die Radialelemente.

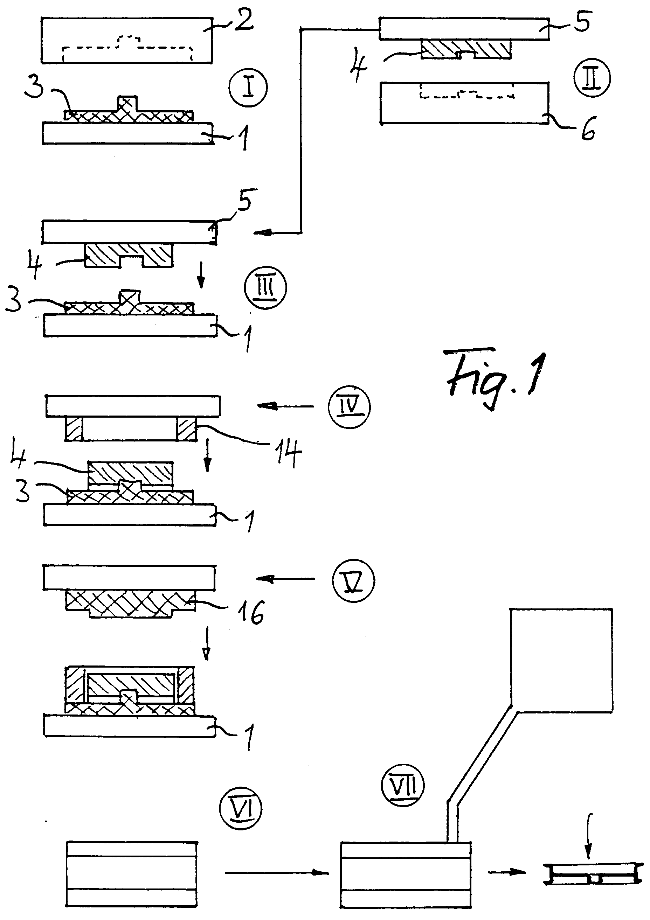

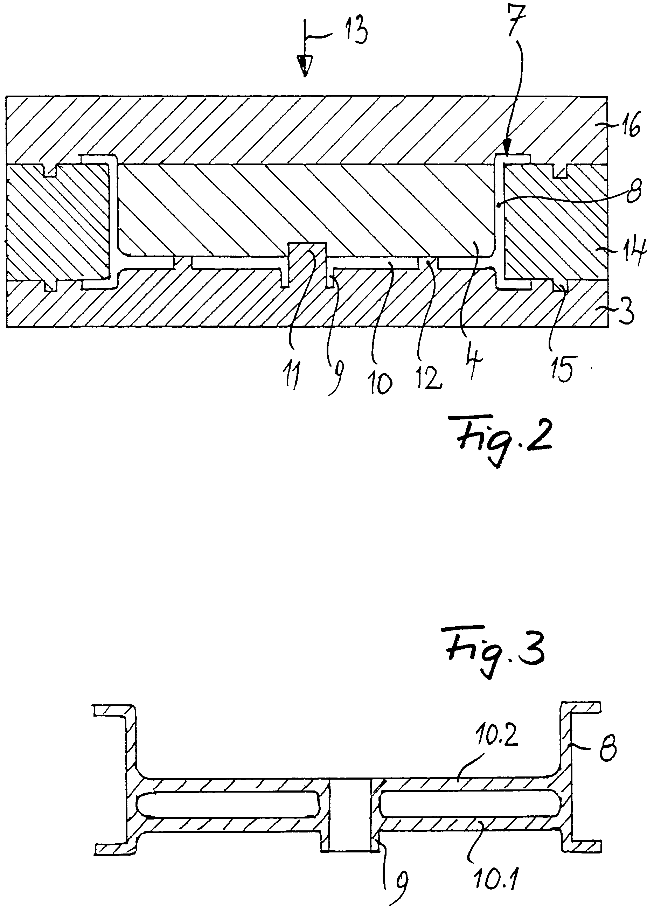

Eine aus Kernformsand hergestellte Gießform für ein Kraftfahrzeugrad muß wegen der vielen Hinterschneidungen aus mehreren im wesentlichen ring- und/oder scheibenförmigen Kernteilen zusammengesetzt werden. Die einzelnen Kernteile werden über gesondere Kernformmaschinen hergestellt und dann zusammengefügt. Das Fließbild gem. Fig. 1 zeigt das Verfahren in vereinfachter Darstellung für eine aus nur vier Kernteilen zusammengesetzte Gießform. Der tatsächliche Aufbau für die Herstellung eines gegossenen Kraftfahrzeugrades ergibt sich dann aus Fig. 2. Bei diesem Verfahren wird in einer Kernformmaschine I, die ein aus zwei Formteilen 1 und 2 gebildeten Formkasten aufweist, ein erster Kernteil 3 üblicher Weise, beispielsweise nach dem Cold-Box-Verfahren, aus einem entsprechenden Formsand unter chemisch-katalytischer Aushärtung hergestellt. Ein weiteres Kernteil 4, das mit dem Kernteil 3 zusammengefügt werden soll, wird in einer zweiten Kernformmaschine II hergestellt, die eine aus einem Formteil 5 und einem zugehörigen Formteil 6 zusammengesetzte Kernform aufweist. Sobald die beiden Kernteile 3 und 4 "geschossen" sind, öffnen die Kernformen, wobei in der Kernformmaschine I der Kernteil 3 im Formteil 1 verbleibt und in eine erste Fügestation III verfahren wird. In einem nächsten Verfahrensschritt wird nun von der Kernformmaschine II das zugehörige Kernteil 4, das nach dem Öffnen des Formtkastens noch mit dem Formteil verbunden ist, in die Fügestation III verfahren, positioniert und anschließend auf das Kernteil 3 abgesenkt bzw. das Kernteil angehoben, so daß beide Kernteile 3 und 4 zusammengefügt werden.

In gleicher Weise werden aus hier nicht näher dargestellten Kernformmaschinen IV und V ein Kernteil 14 und ein Kernteil 16 zugeführt, und wie in der Zeichnung dargestellt, nacheinander auf die bereits zusammengefügten Kernteile 3 und 4 aufgesetzt und so die vollständige Gießform zusammengefügt.

In einer weiteren Station VI wird die fertige Gießform vom Formteil 1, das während des ganzen Verfahrensablaufes als Zentrierung und Führungsmittel gedient hat, gelöst und zur Gießstation VII verfahren und dort abgegossen. Nach dem Erkalten wird die Gießform zerstört und das fertige Kraftfahrzeugrad entnommen. Wegen der hohen Fügegenauigkeit weist ein nach diesem Verfahren hergestelltes Kraftfahrzeugrad praktisch keine Formnähte auf.

Aus dem vorstehend anhand von Fig. 1 nur prinzipiell erläuterten Verfahrensablauf zum Aufbau einer Gießform läßt sich ersehen, daß die in Fig. 2 in einem Axialschnitt dargestellte vollständige Gießform durch ausschließlich axiales Zusammenfügen von ring- und/oder scheibenförmigen Kernteilen zusammengesetzt werden kann. Die vereinfacht dargestellte Grundkontur eines Kraftfahrzeugrades ergibt sich aus dem Formhohlraum 7 der hier vollständig zusammengefügten Form. Das zu gießende Kraftfahrzeugrad besteht im wesentlichen aus einem Felgenkranz 8 und einem Nabenteil 9, der über ein tragendes Radialelement 10 in Form einer geschlossenen Scheibe oder in Form von mehreren radialen Speichen mit dem Felgenkranz 8 verbunden ist.

Ausgehend von dem anhand von Fig. 1 prinzipiell beschriebenem Verfahren wird nun auf das Basiskernteil 3 ein ringförmiges Kernteil 4 aufgesetzt, das im wesentlichen die Kontur des Felgenbettes bestimmt. Die Kernteile 3 und 4 sind mit einander zugeordneten Zapfen und/oder Vertiefungen 15 versehen, die beim Zusammenfügen in axialer Richtung (Pfeil 13) fest ineinander gesteckt werden, wobei die Ausrichtung und Zentrierung beider Formteile zueinander in der Fügeoperation jedoch nicht über die Zapfen und/oder Ausnehmungen in beiden Kernteilen bewirkt wird, sondern ausschließlich über die am entsprechenden Maschinengestell geführten, mit den Kernteilen noch verbundenen Formteile der betreffenden Kernteile.

Auf den Basiskernteil 3 wird dann ein im wesentlichen scheibenförmiger Kernteil 4 aufgesetzt, der über einen entsprechenden Zentrierzapfen 11 am Kernteil 3 zentriert wird und der im wesentlichen den Formhohlraum für das tragende Radialelement 10 sowie die Innenkontur des Felgenkranzes 8 definiert. Die Speichenzwischenräume oder auch Belüftungslöcher im Tragelement 10 werden dann, wie bei dem dargestellten Ausführungsbeispiel dargestellt, durch entsprechende Nocken 12 gebildet. Das Zusammenfügen der beiden Kernteile 3 und 4 erfolgt in Richtung der Radachse (Pfeil 13), wobei die Zentrierung der beiden Kernteile zueinander nicht über die Kernteile selbst, sondern über die mit den Kernteile bei der Fügeoperation noch verbundenen Formteile, die in einem entsprechenden Maschinengestellt exakt zueinander geführt werden können.

Die Form wird dann wieder vollständig von einem scheibenförmigen Kernteil 16 abgeschlossen.

In Fig. 2 ist eine derartige Gießform nur in vereinfachter Weise dargestellt. Beispielsweise die Kontur des Felgenbettes macht es in der Praxis erforderlich, den ringförmigen Kernteil 14 zumindest in zwei Teilringe aufzuteilen. Dies gilt ebenso für den scheibenförmigen Kernteil 4 zur Bildung des Innenraumes.

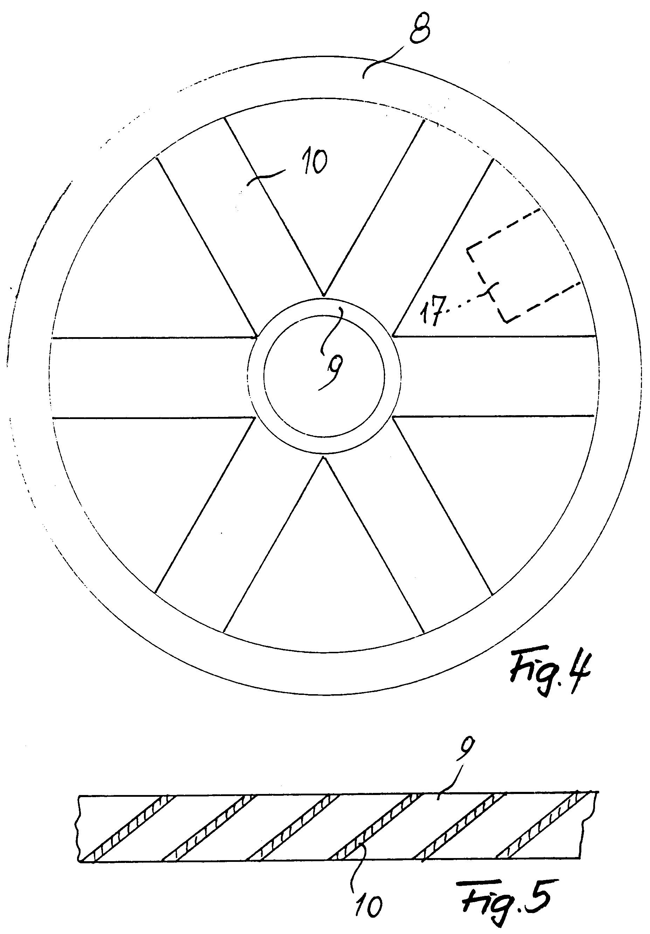

Die Erläuterungen anhand von Fig. 2 lassen erkennen, daß mit diesem Verfahren auch ein einstückiges Kraftfahrzeugrad gegossen werden kann, das wie in Fig. 3 in einer Prinzipskizze dargestellt, einen Felgenkranz 8 aufweist, der über zwei parallel und im Abstand zueinander verlaufende tragenden Radialelemente 10.1 und 10.2 mit dem Nabenteil 9 verbunden ist. Das dargestellte Ausführungsbeispiel gem.

Fig. 3 geht hierbei von einer Form aus, bei der die tragenden Radialelemente 10.1 und 10.2 speichenförmig ausgebildet sind, wobei die beiden parallelen Speichenreihen versetzt zueinander angeordnet sind. Bei der Anordnung von entsprechenden Durchbrüchen, die zugleich als Zentrierung und Fixierung eines entsprechend scheibenförmigen Kernteils dienen, lassen sich die tragenden Radialelemente 10.1 und 10.2 auch scheibenförmig ausbilden, so daß auch ein derartig kompliziertes Bauelement als einstückiges Gußteil erstellt werden kann.

Anhand von Fig. 4 und 5 wird ein Kraftfahrzeugrad gezeigt, bei dem speichenförmige Radialelemente 10 vorgesehen sind, die jedoch gegenüber der Radebene geneigt ausgerichtet sind, wie dies in der geschnittenen Abwicklung des Nabenteils 9 in Fig. 5 dargestellt ist. Bei einem derartigen Rad dienen somit die tragenden speichenförmigen Radialelemente 10 zugleich auch als Ventilatorblätter zur Zwangslüftung der dem Kraftfahrzeugrad zugeordneten Scheibenbremse.

Aus den Fig. 2 bis 5 und der zugehörigen Beschreibung läßt sich ohne weiteres ablesen, daß beispielsweise ausgehend von einer Bauform gem. Fig. 3 vielfältige Gestaltungs- und Kombinationsmöglichkeiten gegeben sind. So ist es beispielsweise möglich, bei einer Formgebung entsprechend Fig. 3, das tragende Radialelement 10.2 ringförmig auszubilden, wobei der Ring mit seiner Außenkante am Felgenkranz 8 unmittelbar anschließt, während er mit seiner Innenkante mit Abstand vom Nabenteil 9 endet. Das tragende Radialelement 10.1 ist in entsprechender Umkehrung am Nabenteil 9 angeschlossen und endet mit Abstand zur Innenfläche des Felgenkranzes 8. Beide scheiben- bzw. ringförmigen tragenden Radialelemente sind dann über entsprechende axial ausgerichtete, als Ventilatorblätter dienende Stege fest miteinander verbunden, wobei diese radialen Stege auch zugleich mit der Außenfläche des Nabenteils 9 und der Innenfläche des Felgenkranzes 8 mit ihren Enden verbunden sind, so daß sich hier ein einstückig gegossenes Kraftfahrzeugrad ergibt, dessen tragendes Radialelement zugleich als Lüfterrad ausgebildet ist.

Das erfindungsgemäße Verfahren erlaubt es auch, ein Kraftfahrzeugrad mit Ventilatorblättern in der Weise herzustellen, daß nur ein scheiben- bzw. kreisringförmiges Radialelement 10 vorgesehen wird, das mit radial ausgerichteten Rotorblättern zusammen mit dem Nabenteil 9 und dem Felgenkranz 8 einstückig gegossen ist, auf das dann von der Außenseite ein zugleich als Zierblende dienender Deckel in einem zweiten Arbeitsgang aufgesetzt wird, der dann den als Lüfterrad dienenden Teil des Kraftfahrzeugrades als sogenanntes Kanalrad gestaltet. Da auch der aufzusetzende Deckel nach dem erfindungsgemäßen Verfahren gegossen werden kann, ergibt sich auch für ein derartiges zusammengesetztes Kraftfahrzeugrad eine hohe Präzision und eine vielfältige Gestaltungsmöglichkeit für den als Lüfter dienenden Radbereich. Auch der aufgesetzte Deckel kann hierbei selbst mit entsprechend stegförmigen Vorsprüngen versehen sein, die als Ventilatorblätter dienen.

Fig. 4 läßt ferner erkennen, daß es auch möglich ist, zusätzlich zu derartig als Ventilatorblättern ausgebildeten speichenförmigen tragenden Radialelementen auf der Innenseite des Felgenkranzes zusätzliche, frei gegen die Nabe vorspringende Ventilatorelemente 17 einstückig anzugießen, wie dies gestrichelt für ein derartiges Element dargestellt ist.

## Patentansprüche

1. Verfahren zum Gießen eines Kraftfahrzeugrades aus Metall, insbesondere aus einer Aluminiumlegierung, das einen Felgenkranz und einen über tragende Radialelemente mit dem Felgenkranz verbundenen Nabenteil aufweist, **dadurch gekennzeichnet,** daß die Gießform durch mehrere axial zusammengefügte, im wesentlichen ring- und/oder scheibenförmige Kernteile gebildet wird, deren Teilungsebene senkrecht zur Radachse ausgerichtet ist.

2. Kraftfahrzeugrad aus Metall, insbesondere aus einer Aluminiumlegierung, mit einem Felgenkranz und einem über tragende Radialelemente verbundenen Nabenteil, gegossen nach dem Verfahren gem. Anspruch 1, dadurch gekennzeichnet, daß der Felgenkranz (8), die tragenden Radialelemente (10) und der Nabenteil (9) einstückig gegossen sind.

3. Kraftfahrzeugrad nach Anspruch 2, dadurch gekennzeichnet, daß die tragenden Radialelemente (10) zumindest teilweise speichenförmig und als Ventilatorblätter ausgebildet sind.

4. Kraftfahrzeugrad nach einem der Ansprüche 2 oder 3, dadurch gekennzeichnet, daß die tragenden Radialelemente (10,1, 10.2) in Umfangsrichtung gesehen, in zwei parallelen Reihen angeordnet sind.

5. Kraftfahrzeugrad nach einem der Ansprüche 2 bis 4, dadurch gekennzeichnet, daß die tragenden Radialelemente (10) zumindest über einen Teil ihrer radialen Erstreckung scheiben- oder ringförmig ausgebildet und über Ventilatorlamellen miteinander verbunden sind.

## Claims

1. A process of casting a motor vehicle wheel in metal, especially an aluminium alloy, which wheel comprises a wheel rim and a hub part connected to the wheel rim by supporting radial elements,
characterised in
that the casting mould is formed of a plurality of axially joined, substantially annular and/or disc-shaped core parts whose dividing plane extends perpendicularly relative to the wheel axis.

2. A motor vehicle wheel made of metal, especially an aluminium alloy, having a wheel rim and a hub part connected to the wheel rim by supporting radial elements, cast in accordance with a process according to claim 1,
characterised in
that the wheel rim (8), the supporting radial elements (10) and the hub part (9) are cast so as to form one piece.

3. A motor vehicle wheel according to claim 2,
characterised in
that the supporting radial elements (10) are at least partly provided so as to be spoke-shaped and in the form of ventilator blades.

4. A motor vehicle according to any one of claims 2 or 2,
characterised in
that the supporting radial elements (10.1, 10.2), if viewed in the circumferential direction, are arranged in two parallel rows.

5. A motor vehicle wheel according to any one of claims 2 to 4,
characterised in
that the supporting radial elements (10), at least over part of their radial extension, are disc-shaped or annular and connected to one another by ventilator plates.

## Revendications

1. Procédé pour couler une roue de véhicule automobile en métal, en particulier en un alliage d'aluminium, laquelle présente une jante et une partie de moyeu reliée via des éléments radiaux porteurs à la jante, caractérisé en ce que le moule de coulée est formé par plusieurs éléments d'âme assemblés axialement et sensiblement annulaires et/ou en forme de disque, dont le plan de division est dirigé perpendiculairement à l'axe de la roue.

2. Roue de véhicule automobile constituée en métal, en particulier en un alliage d'aluminium, comportant une jante et une partie de moyeu reliée via des éléments radiaux porteurs, qui est coulée selon le procédé de la revendication 1, caractérisée en ce que la jante (8), les éléments radiaux (10) et la partie de moyeu (9) sont coulés en une seule pièce.

3. Roue de véhicule automobile selon la revendication 2, caractérisée en ce que les éléments radiaux porteurs (10) sont du moins partiellement en forme de rayons et réalisés sous forme d'une pale de ventilateur.

4. Roue de véhicule automobile selon l'une ou l'autre des revendications 2 et 3, caractérisée en ce que les éléments radiaux porteurs (10.1, 10.2) sont agencés en deux rangées parallèles, vus en direction périphérique.

5. Roue de véhicule automobile selon l'une quelconque des revendications 2 à 4, caractérisée en ce que les éléments radiaux porteurs (10) sont réalisés de façon annulaire ou en forme de disque du moins sur une partie de leur extension radiale, et en ce qu'ils sont reliés les uns aux autres via des lamelles de ventilateur.
